# FASCICULE DE BREVET EUROPEEN

(11) **EP 3 710 517 B1**
(45) Date de publication et mention de la délivrance du brevet: **08.09.2021**
(21) Numéro de dépôt: 18825743.0
(22) Date de dépôt: 12.11.2018
(51) Int. Cl.: C08J 5/04, D06M 15/53, C08L 71/00, C08L 71/08, C08G 75/23, C08J 5/24, C08G 65/40, C08L 81/06, D06M 15/39, D06M 15/63, D06M 15/705

(54) **UTILISATION D'UN POLYARYLETHERCETONE SULFONE OU D'UNE ARYLETHERCETONE NON POLYMERE SULFONEE COMME AGENT DISPERSANT**
VERWENDUNG EINES SULFONIERTEN POLY(ARYLETHERKETONS) ODER EINES SULFONIERTEN NICHTPOLYMEREN ARYLETHERKETONS ALS DISPERGIERMITTEL
USE OF A SULFONATED POLY(ARYL ETHER KETONE) OR OF A SULFONATED NON-POLYMERIC ARYL ETHER KETONE AS A DISPERSANT

(30) Priorité: 14.11.2017 FR 1760709
(43) Date de publication de la demande: 23.09.2020
(73) Titulaire: Arkema France, 92700 Colombes (FR)
(72) Inventeur: LE, Guillaume, 14200 Herouville Saint Clair (FR); SGUERRA, Fabien, 06700 Saint Laurent Du Var (FR); JOUANNEAU, Julien, Bryn Mawr, Pennsylvania 19010 (US)
(74) Mandataire: Arkema Patent
(86) Numéro de dépôt international: PCT/FR2018/052806
(87) Numéro de publication internationale: WO 2019/097148

(56) Documents cités:
- EP-A1- 2 911 807
- WO-A1-2016/156325

## Description

### DOMAINE DE L'INVENTION

La présente invention concerne l'utilisation d'un polyaryléthercétone sulfoné ou, d'une aryléthercétone non polymère sulfonée, comme agent dispersant pour les poudres de résine de polyaryléthercétones, notamment dans la fabrication de semi-produits comportant une résine de polyaryléthercétone et des fibres de renfort.

### ARRIERE-PLAN TECHNIQUE

Les matériaux composites associant une résine thermoplastique à des fibres de renfort présentent en raison de leurs excellentes propriétés mécaniques pour un faible poids un grand intérêt dans de nombreux domaines, notamment dans l'industrie aéronautique et spatiale, mais aussi dans l'industrie automobile et les équipements de sport.

Ces matériaux composites sont généralement fabriqués par consolidation de semi-produits constitués de fibres de renfort enrobées de résine tels que des pré-imprégnés sous forme de nappes unidirectionnelles, de mèches ou de tissés.

Ces semi-produits peuvent être obtenus par imprégnation des fibres par la résine. Il existe différents procédés, dans lesquels la résine peut être fondue, dissoute dans un solvant, ou encore sous forme de poudre, soit en lit fluidisée, soit dispersée dans une solution aqueuse. Les fibres imprégnées sont ensuite le cas échéant débarrassées du solvant ou de la solution aqueuse puis chauffées afin de fondre la résine retenue et former le semi-produit.

Pour les polymères à haut point de fusion tels que les polyaryléthercétones (PAEK), l'imprégnation en passant par une dispersion aqueuse dans un bain est intéressante au niveau économique et environnemental. Avec cette technique, il est important d'assurer une répartition homogène des particules de résine lors de l'imprégnation des fibres.

Il est connu d'inclure des agents dispersants ou tensioactifs dans la dispersion aqueuse afin de permettre la mise en dispersion et de favoriser cette répartition homogène que ce soit sous agitation ou non. Ces agents sont souvent composés d'une partie hydrophobe (chaîne grasse, groupement aromatique) et d'une partie hydrophile (chaîne éthoxylée ou groupement ionique). Les chaines éthoxylées, comme en particulier les chaînes de polyéthylène glycol, ont une faible stabilité thermique.

En présence d'oxygène, elles s'oxydent et forment des radicaux à partir de 200-250°C. Sous atmosphère inerte, elles subissent une thermolyse à partir de 350-370 °C. Les radicaux générés par ces réactions parasites conduisent à la dégradation du polymère (réactions de branchements, présence d'insolubles, baisse de la température de cristallisation...), perturbant les étapes suivantes pour fabriquer le composite et induisant des propriétés insatisfaisantes.

Par ailleurs, le document US 2015/274588A décrit l'utilisation de PAEK sulfoné pour l'ensimage de fibres. Le PAEK sulfoné est dissout dans de l'eau chaude puis enduit sur des fibres. Les fibres sont soumises à un traitement thermique pour être séchées, puis pour désulfoner le PAEK.

Le document US 2004/0131910 décrit des méthodes de sulfonation du poly-éther-cétone-cétone (PEKK) avec de l'acide sulfurique fumant à chaud ou avec de l'acide chlorosulfurique à température ambiante.

Le document WO2016/156325 décrit la préparation de pré-imprégnés par imprégnation de fibres de carbone dans des bains d'imprégnation aqueux comprenant une polyétheréthercétone dispersée sous forme micronisée en présence d'un agent tensioactif.

Il existe un besoin de fournir des dispersions aqueuses de PAEK homogènes pour l'imprégnation de fibres de renfort, tout en évitant de détériorer la stabilité thermique du PAEK.

### RESUME DE L'INVENTION

L'invention concerne en premier lieu l'utilisation d'un polyaryléthercétone sulfoné ou, d'une aryléthercétone non polymère sulfonée, en tant qu'agent dispersant pour une poudre de résine de polyaryléthercétone dans une solution aqueuse.

Dans certains modes de réalisation, le polyaryléthercétone est choisi dans le groupe constitué des poly-éther-cétones (PEK), des poly-éther-éther-cétones (PEEK), des poly-éther-éther-cétone-cétones (PEEKK), des poly-éther-cétone-cétones (PEKK), des poly-éther-cétone-éther-cétone-cétones (PEKEKK), des poly-éther-éther-cétone-éther-cétones (PEEKEK), des poly-éther-éther-éther-cétones (PEEEK), des poly-éther-diphényle-éther-cétone (PEDEK), de leurs mélanges et des copolymères comprenant ceux-ci, le polyaryléthercétone étant de préférence un poly-éther-cétone-cétone (PEKK) ou un poly-éther-éther-cétone (PEEK).

Dans certains modes de réalisation, le polyaryléthercétone sulfoné est choisi dans le groupe constitué des poly-éther-cétones (PEK) sulfonés, des poly-éther-éther-cétones (PEEK) sulfonés, des poly-éther-éther-cétone-cétones (PEEKK) sulfonés, des poly-éther-cétone-cétones (PEKK) sulfonés, des poly-éther-cétone-éther-cétone-cétones (PEKEKK) sulfonés, des poly-éther-éther-cétone-éther-cétones (PEEKEK) sulfonés, des poly-éther-éther-éther-cétones (PEEEK) sulfonés, des poly-éther-diphényle-éther-cétone (PEDEK) sulfonés, de leurs mélanges et des copolymères comprenant ceux-ci.

Dans certains modes de réalisation, l'aryléthercétone non polymère sulfonée est le 1,4-bis(4-phénoxybenzoyl)benzène sulfoné.

Dans certains modes de réalisation, le polyaryléthercétone sulfoné ou, l'aryléthercétone non polymère sulfonée, comporte un degré de sulfonation de 0,01 à 4, de préférence de 0,01 à 1 et de préférence encore de 0,01 à 0,1.

Dans certains modes de réalisation, le polyaryléthercétone sulfoné ou, l'aryléthercétone non polymère sulfonée, comporte des groupements sulfonés choisis parmi les groupements acides sulfoniques et/ou les groupements sulfonates, la proportion molaire de groupements sulfonates dans le polyaryléthercétone sulfoné, respectivement dans l'aryléthercétone non polymère sulfonée, par rapport à l'ensemble des groupements sulfonés étant de préférence supérieure ou égale à 50 %, de préférence encore supérieure ou égale à 80 %.

L'invention concerne également une composition comprenant une poudre de résine de polyaryléthercétone en suspension dans une solution aqueuse, la composition comprenant en outre un polyaryléthercétone sulfoné ou, une aryléthercétone non polymère sulfonée.

Dans certains modes de réalisation, le polyaryléthercétone est choisi dans le groupe constitué des poly-éther-cétones (PEK), des poly-éther-éther-cétones (PEEK), des poly-éther-éther-cétone-cétones (PEEKK), des poly-éther-cétone-cétones (PEKK), des poly-éther-cétone-éther-cétone-cétones (PEKEKK), des poly-éther-éther-cétone-éther-cétones (PEEKEK), des poly-éther-éther-éther-cétones (PEEEK), des poly-éther-diphényle-éther-cétone (PEDEK), de leurs mélanges et des copolymères comprenant ceux-ci, le polyaryléthercétone étant de préférence un poly-éther-cétone-cétone (PEKK) ou un poly-éther-éther-cétone (PEEK).

Dans certains modes de réalisation, le polyaryléthercétone sulfoné est choisi dans le groupe constitué des poly-éther-cétones (PEK) sulfonés, des poly-éther-éther-cétones (PEEK) sulfonés, des poly-éther-éther-cétone-cétones (PEEKK) sulfonés, des poly-éther-cétone-cétones (PEKK) sulfonés, des poly-éther-cétone-éther-cétone-cétones (PEKEKK) sulfonés, des poly-éther-éther-cétone-éther-cétones (PEEKEK) sulfonés, des poly-éther-éther-éther-cétones (PEEEK) sulfonés, des poly-éther-diphényle-éther-cétone (PEDEK) sulfonés, de leurs mélanges et des copolymères comprenant ceux-ci. Les poly-éther-cétone-cétones (PEKK) sulfonés et poly-éther-éther-cétones (PEEK) sulfonés sont particulièrement préférés.

Dans certains modes de réalisation, l'aryléthercétone non polymère sulfonée est le 1,4-bis(4-phénoxybenzoyl)benzène sulfoné.

Dans certains modes de réalisation, le polyaryléthercétone sulfoné ou, l'aryléthercétone non polymère sulfonée, comporte un degré de sulfonation de 0,01 à 4, de préférence de 0,1 à 1 et de préférence encore de 0,1 à 0,5.

Dans certains modes de réalisation, le polyaryléthercétone sulfoné ou, l'aryléthercétone non polymère sulfonée, comporte des groupements sulfonés choisis parmi les groupements acides sulfoniques et/ou les groupements sulfonates, la proportion molaire de groupements sulfonates dans le polyaryléthercétone sulfoné, respectivement dans l'aryléthercétone non polymère sulfonée, par rapport à l'ensemble des groupements sulfonés étant de préférence supérieure ou égale à 50 %, de préférence supérieure ou égale à 80 %.

Dans certains modes de réalisation, la teneur massique en polyaryléthercétone sulfoné ou, en aryléthercétone non polymère sulfonée, par rapport à la poudre de résine de polyaryléthercétone est de 0,1 à 20 %, avantageusement de 0,2 à 10%, de préférence de 0,5 à 5 % et tout particulièrement de 1 à 3 %.

L'invention concerne également un procédé de préparation d'un semi-produit comprenant une résine de polyaryléthercétone et des fibres de renfort, comprenant :
- la fourniture d'une composition telle que décrite ci-dessus, et l'imprégnation de fibres de renfort avec cette composition ;
- le séchage des fibres de renfort imprégnées ;
- le chauffage des fibres de renfort imprégnées de sorte à fondre le polyaryléthercétone ; et
- optionnellement, une étape de calandrage.

Dans certains modes de réalisation, les fibres de renfort sont des fibres de carbone.

Dans certains modes de réalisation, le semi-produit est choisi parmi un pré-imprégné ou une tape.

L'invention concerne également un semi-produit susceptible d'être préparé selon le procédé décrit ci-dessus.

L'invention concerne également l'utilisation d'un semi-produit tel que décrit ci-dessus pour la fabrication de matériaux composites.

La présente invention permet de surmonter les inconvénients de l'état de la technique. Elle fournit plus particulièrement un moyen de disperser (mettre en suspension) une poudre de PAEK dans une solution aqueuse de manière homogène, tout en évitant de détériorer la stabilité thermique du PAEK.

Cela est accompli grâce à l'utilisation d'un PAEK sulfoné ou, d'une aryléthercétone non polymère sulfonée, en tant qu'agent dispersant.

L'invention peut permettre de s'affranchir de l'utilisation de tensioactifs classiques qui sont insuffisamment stables thermiquement.

L'invention peut être mise en œuvre avec une quantité relativement faible de composé sulfoné, ce qui permet de limiter les problèmes de porosité inhérente à ce type de composé. En effet, malgré une stabilité thermique élevée, ces composés peuvent se désulfoner dans les conditions de mise en œuvre, ce qui peut générer des volatiles et augmenter de ce fait la porosité.

L'invention peut permettre d'éviter l'utilisation d'un ensimage des fibres, le PAEK sulfoné permettant de favoriser la liaison entre les fibres de renfort et la matrice de PAEK.

### DESCRIPTION DE MODES DE REALISATION DE L'INVENTION

L'invention est maintenant décrite plus en détail et de façon non limitative dans la description qui suit.

L'invention concerne l'utilisation d'un PAEK sulfoné ou, d'aryléthercétone non polymère sulfonée, comme agent dispersant pour une poudre de résine de PAEK en milieu aqueux.

### Résine de PAEK

Par « *résine* », on entend une composition comprenant majoritairement un ou plusieurs polymères additionnés le cas échéant d'additifs tels que des charges et additifs fonctionnels.

Par « *PAEK »* on entend les polymères comportant des motifs de formules (-Ar-X-) ainsi que des motifs de formule (-Ar'-Y-), dans lesquelles :
- Ar et Ar' désignent chacun un radical aromatique divalent ;
- Ar et Ar' peuvent être choisis, de préférence, parmi le 1,3-phénylène, 1,4-phénylène, le 4,4'-biphénylène, le 1,4-naphthylène, le 1,5-naphthylène et le 2,6-naphthylène, éventuellement substitués ;
- X désigne un groupe électroattracteur, qui peut être choisi, de préférence, parmi le groupe carbonyle et le groupe sulfonyle ;
- Y désigne un groupe choisi parmi un atome d'oxygène, un atome de soufre, un groupe alkylène, tel que notamment -CH₂- et l'isopropylidène.

Parmi les motifs X, au moins 50 mol.%, de préférence au moins 70 mol.% et plus particulièrement, au moins 80 mol.% des motifs X représentent un groupe carbonyle. Dans certains modes de réalisation, tous les motifs X désignent un groupement carbonyle.

Parmi les motifs Y, au moins 50 mol.%, de préférence au moins 70 mol.% et plus particulièrement au moins 80 mol.% des motifs Y représentent un atome d'oxygène. Dans certains modes de réalisation, tous les motifs Y désignent un atome d'oxygène.

Ainsi, dans certains modes de réalisation, le PAEK est un polymère comportant, ou de préférence constitué, de motifs de formules (-Ar-CO-) ainsi que de motifs de formule (-Ar'-O-), les motifs Ar et Ar' étant tels que définis ci-dessus.

Dans certains modes de réalisation, le PAEK est un poly-éther-cétone-cétone (PEKK), comportant une succession de motifs répétés de type -(Ar₁-O-Ar₂-CO-Ar₃-CO)ₙ-, chaque Ar₁, Ar₂ et Ar₃ représentant de manière indépendante un radical aromatique divalent, de préférence un phénylène.

Dans la formule ci-dessus, tout comme dans l'ensemble des formules qui suivent, n représente un nombre entier.

Les liaisons de part et d'autre de chaque motif Ar₁, Ar₂ et Ar₃ peuvent être de type para, ou méta, ou ortho (de préférence de type para ou méta).

Dans certains modes de réalisation, le PEKK comporte une succession de motifs répétés de formule (IA) et/ou de formule (IB) suivantes :

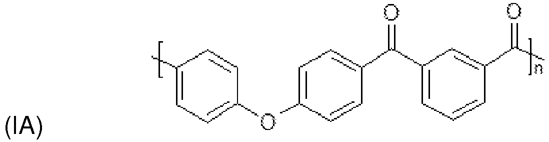

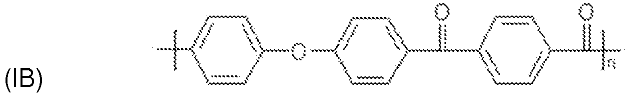

Les motifs de formule (IA) sont des motifs dérivés de l'acide isophtalique (ou motifs I), tandis que les motifs de formule (IB) sont des motifs dérivés de l'acide téréphtalique (ou motifs T).

Dans le PEKK utilisé dans l'invention, la proportion massique de motifs T par rapport à la somme des motifs T et I peut varier de 0 à 5 % ; ou de 5 à 10 % ; ou de 10 à 15 % ; ou de 15 à 20 % ; ou de 15 à 20 % ; ou de 20 à 25 % ; ou de 25 à 30 % ; ou de 30 à 35 % ; ou de 35 à 40 % ; ou de 40 à 45 % ; ou de 45 à 50 % ; ou de 50 à 55 % ; ou de 55 à 60 % ; ou de 60 à 65 % ; ou de 65 à 70 % ; ou de 70 à 75 % ; ou de 75 à 80 % ; ou de 80 à 85 % ; ou de 85 à 90 % ; ou de 90 à 95 % ; ou de 95 à 100 %.

Des gammes de 35 à 100%, notamment de 55 à 85 % et plus spécifiquement encore de 60 à 80 %, sont particulièrement appropriées. Dans l'ensemble des gammes énoncées dans la présente demande, les bornes sont incluses sauf mention contraire.

Dans certains modes de réalisation, le PAEK est un poly-éther-éther-cétone (PEEK), comportant une succession de motifs répétés de type -(Ar₁-O-Ar₂-O-Ar₃-CO)ₙ-, chaque Ar₁, Ar₂ et Ar₃ représentant de manière indépendante un radical aromatique divalent, de préférence un phénylène.

Les liaisons de part et d'autre de chaque motif Ar₁, Ar₂ et Ar₃ peuvent être de type para, ou méta, ou ortho (de préférence de type para ou méta).

Dans certains modes de réalisation, le PEEK comporte une succession de motifs répétés de formule (II) : 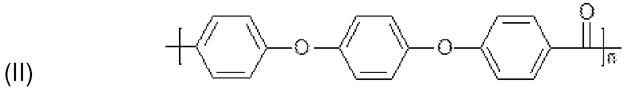 et/ou une succession de motifs répétés de formule (III) : 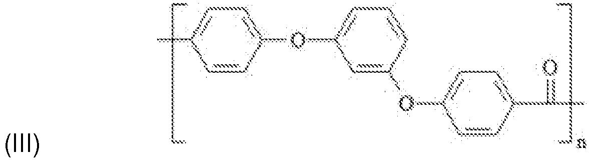 et/ou une succession de motifs répétés de formule (IV) : 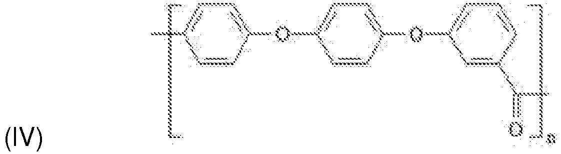 et/ou une succession de motifs répétés de formule (V) :

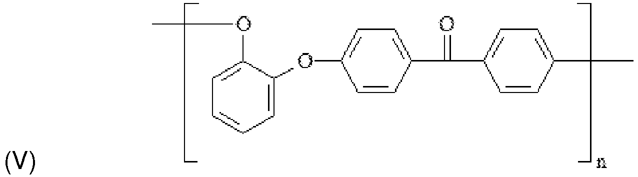

Dans certains modes de réalisation, le PAEK est un poly-éther-cétone (PEK), comportant une succession de motifs répétés de type -(Ar₁-O-Ar₂-CO)ₙ-, chaque Ar₁ et Ar₂ représentant de manière indépendante un radical aromatique divalent, de préférence un phénylène.

Les liaisons de part et d'autre de chaque motif Ar₁ et Ar₂ peuvent être de type para, ou méta, ou ortho (de préférence de type para ou méta).

Dans certains modes de réalisation, le PEK comporte une succession de motifs répétés de formule (VI) :

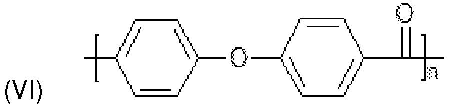

Dans certains modes de réalisation, le PEK comporte une succession de motifs répétés de formule (VII) :

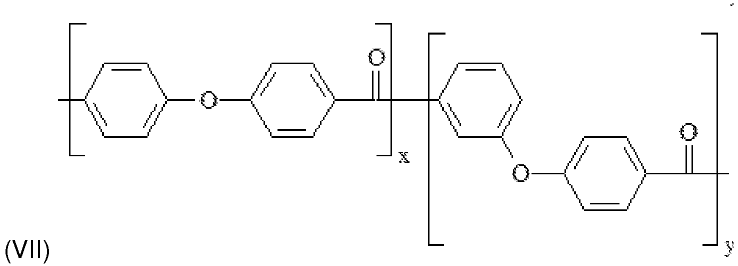

Dans cette formule, tout comme dans les formules suivantes, x et y représentent des nombres entiers.

Dans certains modes de réalisation, le PEK comporte une succession de motifs répétés de formule (VIII) : 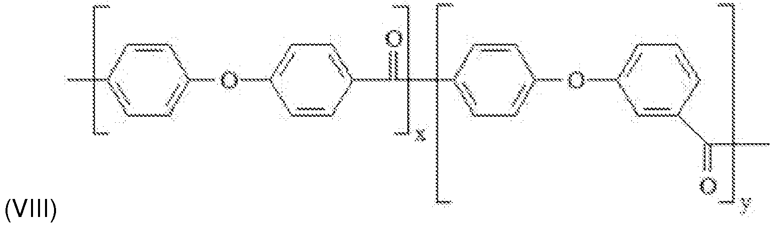 Dans certains modes de réalisation, le PAEK est un poly-éther-éther-cétone-cétone (PEEKK), comportant une succession de motifs répétés de type -(Ar₁-O-Ar₂-O-Ar₃-CO-Ar₄-CO)ₙ-, chaque Ar₁, Ar₂, Ar₃ et Ar₄ représentant de manière indépendante un radical aromatique divalent, de préférence un phénylène.

Les liaisons de part et d'autre de chaque motif Ar₁, Ar₂, Ar₃ et Ar₄ peuvent être de type para, ou méta, ou ortho (de préférence de type para ou méta).

Dans certains modes de réalisation, le PEEKK comporte une succession de motifs répétés de formule (IX) :

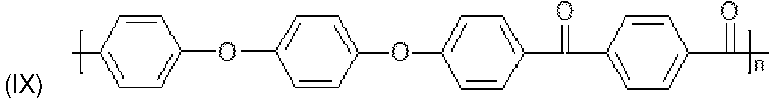

Dans certains modes de réalisation, le PAEK est un poly-éther-éther-éther-cétone (PEEEK), comportant une succession de motifs répétés de type -(Ar₁-O-Ar₂-O-Ar₃-O-Ar₄-CO)ₙ-, chaque Ar₁, Ar₂, Ar₃ et Ar₄ représentant de manière indépendante un radical aromatique divalent, de préférence un phénylène.

Les liaisons de part et d'autre de chaque motif Ar₁, Ar₂, Ar₃ et Ar₄ peuvent être de type para, ou méta, ou ortho (de préférence de type para ou méta).

Dans certains modes de réalisation, le PEEEK comporte une succession de motifs répétés de formule (X) :

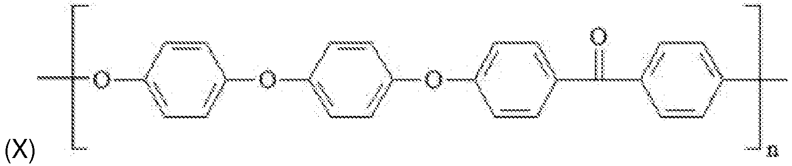

Dans certains modes de réalisation, le PAEK est un poly-éther-cétone-éther-cétone-cétone (PEKEKK), comportant une succession de motifs répétés de type -(Ar₁-O-Ar₂-CO-Ar₃-O-Ar₄-CO-Ar₅-CO)ₙ-, chaque Ar₁, Ar₂, Ar₃, Ar₄ et Ar₅ représentant de manière indépendante un radical aromatique divalent, de préférence un phénylène.

Les liaisons de part et d'autre de chaque motif Ar₁, Ar₂, Ar₃, Ar₄ et Ar₅ peuvent être de type para, ou méta, ou ortho (de préférence de type para ou méta).

Dans certains modes de réalisation, le PAEK est un poly-éther-éther-cétone-éther-cétone (PEEKEK), comportant une succession de motifs répétés de type -(Ar₁-O-Ar₂-O-Ar₃-CO-Ar₄-O-Ar₅-CO)ₙ-, chaque Ar₁, Ar₂, Ar₃, Ar₄ et Ar₅ représentant de manière indépendante un radical aromatique divalent, de préférence un phénylène.

Les liaisons de part et d'autre de chaque motif Ar₁, Ar₂, Ar₃, Ar₄ et Ar₅ peuvent être de type para, ou méta, ou ortho (de préférence de type para ou méta).

Dans certains modes de réalisation, le PAEK est selon la formule la plus générale indiquée ci-dessous, dans laquelle certains motifs Ar et/ou Ar' représentent un radical divalent dérivé du diphényle ou du biphénol.

Dans certains modes de réalisation, le PAEK est un poly-éther-diphényle-éther-cétone (PEDEK), comportant une succession de motifs répétés de type -(Ar₁-O-D-O-Ar₂-CO)ₙ-, chaque Ar₁ et Ar₂ représentant de manière indépendante un radical aromatique divalent, de préférence un phénylène, et D représentant un radical divalent dérivé du diphényle.

Les liaisons de part et d'autre de chaque motif Ar₁ et Ar₂ peuvent être de type para, ou méta, ou ortho (de préférence de type para ou méta).

Dans certains modes de réalisation, le PEDEK comporte une succession de motifs répétés de formule (XI) :

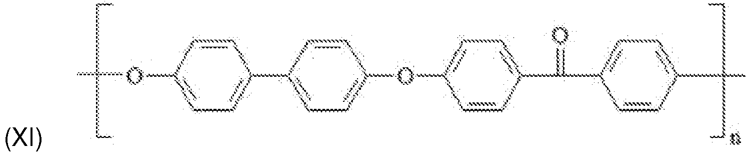

Des mélanges des PAEK précédents peuvent également être utilisés, ainsi que des copolymères des PAEK précédents.

Le PEEK et le PEKK ainsi que leurs mélanges sont particulièrement préférés.

La résine de PAEK peut comprendre un ou plusieurs polymères additionnels n'appartenant pas à la famille des PAEK.

De préférence, la teneur massique en PAEK dans la résine de PAEK est supérieure ou égale à 50 %, de préférence à 60 %, de préférence encore à 70 %, de préférence encore à 80 % et de préférence encore à 90 %.

Dans certains modes de réalisation, la résine de PAEK consiste essentiellement en un ou plusieurs PAEK.

Dans certains modes de réalisation, la résine de PAEK comprend du PEKK, la teneur massique en PEKK dans la résine de PAEK étant supérieure ou égale à 50 %, de préférence à 60 %, de préférence encore à 70 %, de préférence encore à 80 % et de préférence encore à 90 %.

Dans certains modes de réalisation, la résine PAEK consiste essentiellement en du PEKK.

La résine peut comprendre un ou plusieurs phosphates ou sels de phosphate, pour améliorer la stabilité du PAEK à l'état fondu.

La résine peut comprendre des additifs tels que des charges et additifs fonctionnels. Il est également possible de se dispenser de charges et/ou de se dispenser d'additifs fonctionnels.

### Aryléthercétone non polymère

Par « aryléthercétone non polymère » on entend une molécule comportant au moins un résidu de formule : (-Ar-O-) ainsi qu'au moins un résidu de formule : (-Ar'-C(O)-), dans lesquelles :
- Ar et Ar' désignent chacun un radical aromatique divalent ; et,
- Ar et Ar' peuvent être choisis indépendamment, de préférence, parmi le 1,3-phénylène, 1,4-phénylène, le 4,4'-biphénylène, le 1,4-naphthylène, le 1,5-naphthylène et le 2,6-naphthylène, éventuellement substitués ;
ladite molécule étant non polymère c'est-à-dire ne comprenant pas de motif de répétition.

Dans certains modes de réalisation, Ar et Ar' représentent de manière indépendante un radical phénylène.

Les liaisons de part et d'autre de Ar et Ar' peuvent être de manière indépendante de type para, ou méta, ou ortho. De préférence, les liaisons de part et d'autre de Ar et Ar' peuvent être de manière indépendante de type para, ou de type méta.

Dans certains modes de réalisation, l'aryléthercétone non polymère peut notamment être une molécule comportant au moins un résidu de formule : (-O-Ar₁-C(O)-), dans laquelle :
- Ar₁ désigne un radical aromatique divalent ; et,
- Ar₁ peut être choisi, de préférence, parmi le 1,3-phénylène, 1,4-phénylène, le 4,4'-biphénylène, le 1,4-naphthylène, le 1,5-naphthylène et le 2,6-naphthylène, éventuellement substitués ; et,
ladite molécule étant non polymère c'est-à-dire ne comprenant pas de motif de répétition.

Dans certains modes de réalisation, Ar₁ représente un radical phénylène.

Les liaisons de part et d'autre de Ar₁ peuvent être de type para, ou méta, ou ortho. De préférence, les liaisons de part et d'autre de Ar₁ peuvent être de type para, ou de type méta.

Dans certains modes de réalisation, l'aryléthercétone non polymère peut notamment être une molécule de formule :

Aro-O-Ar₁-C(O)-Ar₂-C(O)-Ar₃-O-Ar₄,

dans laquelle :
- Ar₀ et Ar₄ représentent chacun un radical aromatique monovalent, de préférence choisi de manière indépendante parmi le phényle et le naphtyle ;
- Ar₁, Ar₂ et Ar₃ représentent chacun un radical aromatique divalent, de préférence choisi de manière indépendante parmi le 1,3-phénylène, 1,4-phénylène, le 4,4'-biphénylène, le 1,4-naphthylène, le 1,5-naphthylène et le 2,6-naphthylène, éventuellement substitués.

Dans certains modes de réalisation, Ar₀ et Ar₄ représentent un radical phényle et Ar₁, Ar₂ et Ar₃ représentent chacun un radical phénylène.

Les liaisons de part et d'autre de Ar₁, Ar₂ et Ar₃ peuvent être de type para, ou méta, ou ortho. De préférence, les liaisons de part et d'autre de Ar₁ Ar₂ et Ar₃ peuvent être de type para, ou de type méta.

Dans un mode de réalisation particulier, l'aryléthercétone non polymère est le 1,4-bis(4-phénoxybenzoyl)benzène.

### PAEK sulfoné et aryléthercétone non polymère

Par « *sulfoné* », on entend que le PAEK ou, l'aryléthercétone non polymère, comporte en tant que substituant(s) au moins un groupement qui est désigné ici « *groupement sulfoné* », c'est-à-dire un groupement acide sulfonique de formule -SO₃H ou un groupement sulfonate de formule SO₃M où M⁺ représente un cation monovalent. De préférence, M représente le cation sodium (Na) ou le cation potassium (K).

L'ensemble de la description des PAEK figurant ci-dessus au sujet de la résine s'applique de la même manière au PAEK sulfoné.

L'ensemble de la description des aryléthercétones non polymère figurant ci-dessus s'applique de la même manière aux aryléthercétones non polymère sulfonées.

Dans des modes de réalisation particuliers, le PAEK sulfoné peut être un PEEK (tel que décrit ci-dessus) sulfoné ou un PEKK (tel que décrit ci-dessus) sulfoné.

Le PAEK sulfoné comprend un nombre d'unités de répétition supérieur ou égal à 2, de préférence supérieur ou égal à 10, de préférence encore supérieur ou égal à 100.

La masse moléculaire moyenne en nombre du PAEK sulfoné vaut de préférence de 1500 à 30000 g/mol, de préférence encore de 5000 à 20000 g/mol, et de préférence encore de 10000 à 20000 g/mol. Le fait d'utiliser un polymère avec une masse molaire cible permet de moduler la viscosité de la dispersion afin de limiter par exemple la sédimentation ou faciliter l'entraînement de la poudre par les fibres.

Dans le PAEK sulfoné, les groupements sulfonés peuvent être présents en tant que substituants d'atomes d'hydrogène en toute position de la molécule.

En particulier, les groupements sulfonés peuvent être présents en tant que substituants d'atomes d'hydrogène sur un ou plusieurs motifs Ar et Ar' tels que décrits ci-dessus.

De préférence, les groupements sulfonés sont présents sur un ou plusieurs motifs Ar et Ar' liés à un motif éther -O-.

Un exemple de PAEK sulfoné est le PEKK sulfoné de formule générique (XIII) : 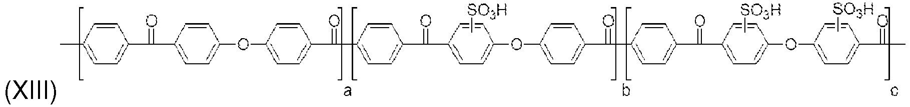 dans laquelle a, b et c représentent chacun indépendamment 0 ou un nombre entier. Il est entendu que, dans la formule précédente, les groupements acides sulfoniques peuvent être également remplacés en tout ou partie par des groupements sulfonates.

Le PAEK sulfoné peut être préparé par sulfonation du PAEK correspondant ou par polymérisation de monomères sulfonés, ou de mélanges de monomères sulfonés et non sulfonés. La réaction de sulfonation du PAEK peut être effectuée par exemple en mettant le PAEK en présence d'acide sulfurique fumant (H₂SO₄ + SO₃). La température de mise en œuvre de la réaction peut notamment être de 20 à 90°C, de préférence de 20 à 60°C. La durée de la réaction peut notamment être de 0,5 à 24 h, de préférence de 1 à 8 h. La concentration du PAEK dans l'acide est de préférence de 1 à 40 %, de préférence encore de 5 à 35 %, et de préférence encore de 10 à 30 % (massique).

Alternativement, la réaction de sulfonation peut être effectuée dans des conditions plus douces, en faisant réagir le PAEK dans de l'acide chlorosulfurique (ClSO₃H). La température de mise en œuvre de la réaction peut notamment être de 0°C à 50°C, de préférence de10 à 25°C. La durée de la réaction peut notamment être de 1 heure à 12 heures, de préférence de 2 heures à 10 heures. La concentration du PAEK dans l'acide est de préférence de 1 à 40 %, de préférence encore de 5 à 35 %, et de préférence encore de 10 à 30 % (massique).

Après la réaction de sulfonation, le produit d'intérêt peut être collecté, par exemple en le versant dans de l'eau froide de sorte à le faire précipiter. Il peut être lavé à l'eau froide pour éliminer l'excès d'acide et séché.

Les réactions ci-dessus permettent de greffer des groupements acides sulfoniques sur les molécules.

Il est ensuite possible de convertir tout ou partie de ces groupements acides sulfoniques en groupements sulfonates, par mise en contact avec une base, telle que l'hydroxyde de sodium ou de potassium (réaction de neutralisation).

La température de mise en œuvre de la réaction de neutralisation peut notamment être de 5 à 95°C, de préférence de 50 à 80°C. La durée de la réaction peut notamment être de 1 à 50 h, de préférence de 1 à 8 h. La concentration du PAEK sulfoné dans la solution de base peut être notamment de 5 à 50 % en poids, et de préférence de 10 à 30 % en poids.

On peut caractériser le PAEK sulfoné par son degré de sulfonation. Le degré de sulfonation correspond au nombre moyen de groupements sulfonés par unité de répétition dans le polymère. Plus le degré de sulfonation est élevé, plus le PAEK sulfoné est soluble dans l'eau. La solubilité dépend également de la nature du PAEK, de sa masse molaire et de sa cristallinité notamment. Il est généralement souhaitable de mettre en œuvre le degré de sulfonation minimal permettant de solubiliser le PAEK sulfoné dans l'eau.

Selon la nature du PAEK et selon le degré de sulfonation, certains PAEK sulfonés sont solubles dans l'eau à température ambiante, d'autres uniquement à température plus élevée, par exemple 30, ou 40 ou 50°C.

De préférence, le PAEK sulfoné est soluble dans l'eau à température ambiante (20°C), ce qui facilite la gestion du baind'imprégnation et évite une perte d'eau induisant une variation de viscosité du bain.

On peut contrôler le degré de sulfonation en agissant sur les conditions de la réaction de sulfonation, notamment la durée de la réaction, la température et la concentration en ions sulfonates.

Les articles Sulfonated Poly(aryl ether ketone)s de Ulrich et Rafler dans Die Angewandte Makromolekulare Chemie 263:71-78 (1998) et Sulfonated Poly(ether ketone ketone) lonomers as Proton Exchange Membranes, de Swier et al. dans Polymer Engineering and Science, DOI 10.1002/pen.20361 (2005) décrivent des exemples de sulfonation de PAEK ainsi que d'ajustement possible des conditions de réaction.

Le degré de sulfonation peut être déterminé par titration acido-basique, par exemple avec de la soude. A titre d'exemple, on peut prélever une prise d'essai de 1 à 2 g de PAEK sulfoné, le dissoudre dans 60 mL d'eau pure (par exemple de qualité HPLC) en agitant pendant par exemple 15 minutes, puis effectuer un dosage par de la soude à 0,01 N.

Le degré de sulfonation du PAEK sulfoné peut notamment valoir de 0,01 à 0,05 ; ou de 0,05 à 0,1 ; ou de 0,1 à 0,2 ; ou de 0,2 à 0,5 ; ou de 0,5 à 1 ; ou de 1 à 2 ; ou de 2 à 3 ; ou de 3 à 4. Des gammes de 0,1 à 1 et de 0,1 à 0,5 peuvent être particulièrement appropriées.

Le taux de neutralisation des groupements sulfonés correspond à la proportion molaire de groupements sulfonates par rapport à l'ensemble des groupements sulfonés.

On peut contrôler le taux de neutralisation en agissant sur la quantité de base mise en présence avec le PAEK sulfoné. De préférence on utilise une quantité de base stœchiométrique, ou légèrement inférieure (0,98 équivalent), par rapport aux groupements sulfonés.

Le taux de neutralisation peut être déterminé par titration en dosant l'acidité résiduelle par de la soude.

De préférence, le taux de neutralisation du PAEK sulfoné est de 50 % à 100 %, de préférence encore de 75 % à 100 % et de préférence encore de 95 % à 100 %.

La neutralisation permet de limiter la dégradation de la résine de PAEK par le PAEK sulfoné.

Les mélanges de différents PAEK sulfonés sont considérés dans la présente description comme un PAEK sulfoné.

Les présents inventeurs ont par ailleurs découvert que la sulfonation des PAEK décrite ci-dessus peut être appliquée exactement de la même manière à une aryléthercétone non polymère. Il est en particulier possible de fabriquer ainsi du 1,4-bis(4-phénoxybenzoyl)benzène sulfoné.

A titre d'exemple, ce 1,4-bis(4-phénoxybenzoyl)benzène sulfoné peut répondre à la formule (XII) suivante : 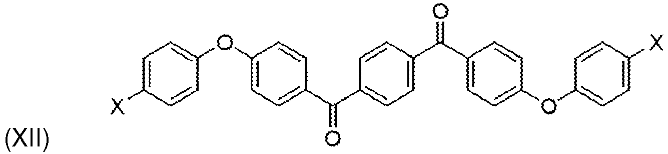 dans laquelle chaque X représente indépendamment un atome d'hydrogène ou un groupement sulfoné, au moins l'un des deux X représentant un groupement sulfoné.

De préférence, chaque X représente un groupement sulfoné.

### Suspension de poudre de résine

Selon l'invention, une composition est préparée en ajoutant la poudre de résine de PAEK à une solution aqueuse de sorte à former une suspension ou dispersion.

On entend par « *suspension »* ou « *dispersion »* une composition hétérogène comportant une phase liquide et une phase solide. La phase liquide est aqueuse et contient le PAEK sulfoné ou, l'aryléthercétone non polymère sulfonée, ainsi que d'autres additifs, le cas échéant. La phase solide comprend ou consiste essentiellement en la poudre de résine de PAEK.

Afin d'assurer l'homogénéité optimale de la suspension, et une bonne imprégnation ultérieure des fibres, il est préféré que la poudre de résine soit finement divisée. Plus spécifiquement, il est préféré que la poudre de résine de PAEK présente un diamètre médian Dv50 allant de 1 à 300 µm, de préférence de 5 à 100 µm et tout particulièrement de 10 à 50 µm, tel que mesuré selon la norme ISO 13 320.

De préférence, la teneur en poudre de résine de PAEK ou, de l'aryléthercétone non polymère sulfonée, dans cette composition vaut de 1 à 50 %, de préférence de 10 à 40 % et tout particulièrement de 25 à 35 % en poids (par rapport au poids de la composition totale).

Le PAEK sulfoné ou, l'aryléthercétone non polymère sulfonée, est utilisé en tant qu'agent dispersant, ou tensioactif, dans la composition. Le PAEK sulfoné ou, l'aryléthercétone non polymère sulfonée, est présent dans la phase aqueuse de la composition.

Dans certains modes de réalisation, la proportion massique de PAEK sulfoné ou, d'aryléthercétone non polymère sulfonée, par rapport à la somme du PAEK sulfoné et de la résine de PAEK, ou respectivement par rapport à la somme de l'aryléthercétone non polymère sulfonée et de la résine PAEK, est de 0,1 à 0,2 % ; ou de 0,2 à 0,5 % ; ou de 0,5 à 1 % ; ou de 1 à 2 % ; ou de 1 à 5 % ; ou de 5 à 10 %. Une gamme de 0,5 à 5 % est particulièrement appropriée.

La proportion massique optimale peut être choisie en fonction de la quantité de poudre à disperser, de sa granulométrie et de son aspect de surface.

Le PAEK sulfoné peut être de même nature ou non que le PAEK de la résine.

La phase aqueuse de la composition peut optionnellement comprendre un ou plusieurs autres tensioactifs différents du PAEK sulfoné ou, de l'aryléthercétone non polymère sulfonée. Il est toutefois préféré qu'aucun autre tensioactif ne soit présent pour assurer la fonction de dispersion.

Par « *utilisation en tant qu'agent dispersant* », on entend que le PAEK sulfoné ou, l'aryléthercétone non polymère sulfonée, permet d'améliorer la dispersion de la poudre de résine de PAEK dans la solution aqueuse, et plus particulièrement de réduire le temps de mise en dispersion. Ainsi, lorsque l'on introduit dans une solution aqueuse de PAEK sulfoné de 25°C, ou dans une solution aqueuse d'aryléthercétone non polymère sulfonée de 25°C, une quantité de 20% en poids par rapport au poids de la dispersion finie de poudre de PAEK ayant un D_{V} 50 moyen de 20 µm et que l'on disperse cette poudre dans la solution sous agitation modérée, la présence du PAEK sulfoné, respectivement de l'aryléthercétone non polymère sulfonée, permet d'obtenir une dispersion homogène dans un temps inférieur à 3 h, de préférence inférieur à 2h, alors que, dans les mêmes conditions mais en l'absence de PAEK sulfoné, respectivement en l'absence d'aryléthercétone non polymère sulfonée, aucune dispersion homogène n'est obtenue.

La phase aqueuse de la dispersion peut, si nécessaire, comporter d'autres additifs tels que des agents épaississants, agents anti-mousse, agents biocides. De préférence, afin de limiter la présence d'additifs dans les semi-produits et les problèmes potentiels associés, la quantité totale en autres additifs n'excède pas 4 % en poids, en particulier 3 % et tout particulièrement 2 % en poids voire 1 % en poids de la composition totale.

De préférence encore, la phase aqueuse de la dispersion ne comporte pas d'autres additifs, et en particulier pas d'agents épaississants.

La phase aqueuse de la dispersion est constituée majoritairement d'eau. La phase aqueuse de la dispersion comporte au moins 60 %, de préférence 70 %, de manière encore préférée au moins 80 % et tout particulièrement au moins 90 % en poids d'eau. L'eau utilisée pour préparer la dispersion est de préférence une eau déminéralisée.

La dispersion et plus particulièrement sa phase aqueuse peut comporter en outre un ou plusieurs composés organiques volatils.

Par « *composé organique volatil* », on entend un composé contenant au moins l'élément carbone et un ou plusieurs des éléments choisi parmi l'hydrogène, les halogènes, l'oxygène, le soufre, le phosphore, le silicium et l'azote, à l'exception des oxydes de carbone et des carbonates et bicarbonates, le composé ayant une température d'ébullition à pression atmosphérique inférieure à 200°C, et de préférence inférieure à 150°C, de préférence encore inférieure à 120°C et tout particulièrement inférieure à 100°C.

Ces composés organiques volatils, solubles dans l'eau dans les conditions d'utilisation, peuvent être choisis notamment dans les familles des alcools, cétones, aldéhydes, esters d'acides carboxyliques, glycols et éthers.

Dans certains modes de réalisation, à titre de composé organique volatil on utilise un alcool choisi parmi l'éthanol, l'isopropanol, le n-propanol, le n-butanol, le 2-butanol, le tert-butanol, le 1-méthoxy-2-propanol, le 1-éthoxy-2-propanol et leurs mélanges, un glycol choisi parmi l'éthylène glycol, le propylène glycol et leurs mélanges, une cétone choisie telle que l'acétone, un éther ou encore un ester d'acide carboxylique choisi parmi l'acétate de méthyle, l'acétate d'éthyle et l'acétate de propyle et leurs mélanges.

Particulièrement préférés sont les composés organiques volatils formant un azéotrope avec l'eau facilitant leur élimination tels que l'éthanol, l'acétate de méthyle, l'acétate de propyle et leurs mélanges.

L'ajout de tels composés organiques volatils à la phase aqueuse peut permettre de réduire la teneur en tensioactif requise pour stabiliser la résine PAEK dans la dispersion et/ou d'augmenter la viscosité de la dispersion en assurant un meilleur mouillage des particules dispersées. Leur volatilité assure qu'ils ne subsistent pas dans la résine, contrairement à des additifs habituels non volatils qui risquent alors d'être décomposés en espèces réactives à la fusion de la résine.

La phase aqueuse de la dispersion peut comporter de préférence de 0 à 50 %, de préférence encore de 1 à 40 %, ou de 5 à 30 %, ou de 10 à 25 % en poids d'un ou plusieurs composés volatils. La teneur de ces composés est ajustée pour éviter de faire précipiter le tensioactif.

La dispersion obtenue présente de préférence une viscosité dynamique, telle que mesurée à 25°C sous contraintede cisaillement de 6,8 s⁻1 sur un viscosimètre Brookfield DVT2T Extra, de 0,1 Pa·s à 20 Pa·s, en particulier de 0,1 à 5 Pa·s, en particulier de 0,3 à 3 Pa·s et tout particulièrement de 0,5 à 2 Pa·s.

La dispersion peut être réalisée de manière connue en soi. On peut par exemple la préparer en introduisant dans un récipient de volume adapté et muni d'un dispositif d'agitation approprié la quantité d'eau requise, puis en ajoutant ensuite l'agent dispersant ainsi que le ou les autres additifs, le cas échéant. Si nécessaire, le mélange est agité jusqu'à l'obtention d'une solution homogène. Dans la solution aqueuse est ensuite introduite la poudre de résine de PAEK, puis on agite jusqu'à obtention d'une dispersion stable.

Les ajouts et mélanges pour préparer la dispersion peuvent être réalisés notamment à une température de 10 à 95°C,de préférence de 20 à 60°C. Le choix d'une température adaptée peut être effectué notamment en fonction de la solubilité du PAEK sulfoné ou, de l'aryléthercétone non polymère sulfonée, dans l'eau. Il est préférable d'utiliser une température relativement élevée si le PAEK sulfoné, respectivement l'aryléthercétone non polymère sulfonée, est relativement peu soluble dans l'eau, alors qu'une température plus faible et notamment la température ambiante peut convenir si la solubilité du PAEK sulfoné, respectivement l'aryléthercétone non polymère sulfonée, dans l'eau est élevée.

### Procédé de préparation d'un semi-produit

On entend par « *semi-produit »* un produit comprenant une résine et des fibres de renfort, qui est utilisé comme produit intermédiaire dans la fabrication de matériaux composites. Les semi-produits peuvent être notamment des pré-imprégnés sous formes de nappes unidirectionnelles de mèches, de tissés, ou encore des mélanges fibres-matrices.

Les fibres de renfort utilisées pour la fabrication des semi-produits peuvent être choisies parmi toutes les fibres susceptibles d'être utilisées comme renfort dans la fabrication de pièces en matériaux composites.

Ainsi, il peut notamment s'agir de fibres de verre, de fibres de quartz, de fibres de carbone, de fibres de graphite, de fibres de silice, de fibres métalliques comme des fibres d'acier, des fibres d'aluminium ou des fibres de bore, de fibres céramiques comme des fibres de carbure de silicium ou de carbure de bore, de fibres organiques de synthèse comme des fibres d'aramide ou des fibres de poly(p-phénylène benzobisoxazole), plus connues sous le sigle PBO, ou encore de fibres de PAEK, ou encore de mélanges de telles fibres.

De préférence, il s'agit de fibres de carbone ou de fibres de verre, et plus particulièrement de fibres de carbone.

Les fibres sont de préférence non ensimées. Lorsqu'elles sont ensimées, l'ensimage est de préférence adapté à la matrice, notamment en ce qu'il n'entraîne pas de produits de dégradation néfastes pour la matrice.

Les fibres de renfort utilisées sont généralement continues.

De préférence, elles se présentent sous la forme de fibres unidirectionnelles, par exemple sous forme de fils regroupant plusieurs milliers de filaments élémentaires (typiquement de 3000 à 48000) mesurant, par exemple, de 6 à 10 µm de diamètre pour les fibres de carbone. Ce type de fibres est connu sous la dénomination de mèche (en anglais : « *rovings »*).

Les fibres peuvent néanmoins aussi être organisées de manière différente, par exemple sous forme de mat, ou encore de textiles obtenus par tissage de mèches.

Les semi-produits selon l'invention peuvent être fabriqués de manière conventionnelle, en mettant en œuvre la dispersion telle que décrite ci-dessus.

Plus spécifiquement, ils peuvent être obtenus par introduction et circulation des fibres de renfort dans un bain de dispersion telle que décrite ci-dessus. Les fibres imprégnées de poudre de résine PAEK sont ensuite sorties du bain et débarrassées de l'eau, par exemple par séchage dans un four à infra-rouges. Les fibres imprégnées séchées sont ensuite chauffées jusqu'à fusion de la résine, afin de permettre l'enrobage des fibres par la résine PAEK. Les fibres enrobées obtenues sont ensuite le cas échéant mises en forme, par exemple par calandrage. Cette étape peut permettre de texturer et d'assurer le dimensionnement du semi-produit.

De préférence, les semi-produits selon l'invention comportent de 1 à 99 % en poids, de préférence de 30 à 90 %, en particulier de 50 à 80 % en poids, et en particulier de 60 à 70 % en poids de fibres de renfort.

Les semi-produits obtenus selon ce peuvent être utilisés notamment pour la fabrication de pièces composites.

Les pièces composites sont obtenues par exemple en fabriquant d'abord une préforme, notamment par placement ou drapage des semi-produits pré-imprégnés dans un moule. La pièce composite est ensuite obtenue par consolidation, étape lors de laquelle la préforme est chauffée, généralement sous pression dans un autoclave, de sorte à assembler par fusion les semi-produits. De préférence, les semi-produits fabriqués selon l'invention peuvent être consolidés hors autoclave, par exemple sous bâche à vide placée dans une étuve.

Les semi-produits fabriqués selon le procédé de l'invention sont caractérisés en particulier par une résine dont la viscosité évolue peu malgré les températures élevées requises pour leur fabrication afin de fondre la résine.

Dans les procédés de fabrication des pièces composites, les semi-produits sont soumis à différents cycles thermiques sous pression ou sous vide afin de les assembler entre eux pour former la pièce composite et/ou de la mettre en forme.

Les produits composites fabriqués selon le procédé de l'invention sont caractérisés en particulier par une résine dont la viscosité a peu évolué malgré les températures élevées requises pour leur fabrication.

Lors de ces étapes, il importe que la viscosité de la matrice ne soit pas trop élevée, afin d'assurer que les semi-produits épousent bien les formes du moule. La viscosité de la matrice permet également d'assurer un bon écoulement pendant la consolidation et d'éviter ainsi les défauts de surface tels que des plissements.

Les semi-produits peuvent ensuite être assemblés, par exemple par drapage manuel ou automatisé ou par dépose robotisée, et mis en forme par consolidation, pour la fabrication de pièces composites. Les pièces composites ainsi fabriquées peuvent être transformées davantage, afin d'obtenir des assemblages de pièces composites complexes. Ainsi, il est possible de co-consolider des pièces composites, procédé généralement réalisé en autoclave au moyen d'un nouveau cycle thermique, ou de venir souder des pièces les unes aux autres par échauffement local.

### EXEMPLES

Les exemples suivants illustrent l'invention sans la limiter.

### Exemple 1 - Préparation d'un S-PEKK non neutralisé

Un PEKK produit par Arkema, de référence Kepstan® 6004 PF (10 g), ayant un MVI (melt volume index) de 23.4cm³/10min (à 380°C sous une charge de 1kg), ainsi que du CISO₃H (38,8 g) sont mis en présence à 0°C. Le mélange est ensuite agité vigoureusement et chauffé à 50°C pendant 6 heures. Le mélange est ensuite refroidi à 0°C et dudichlorométhane (50 mL) est ajouté pour fluidifier le mélange. Puis l'excès d'acide est quenché avec de l'eau (100 mL). Un solide se forme, il est filtré et lavé abondamment à l'eau pour enlever l'acide résiduel. Enfin le solide est séché à l'étuve sous vide pendant 2 heures à 120°C.

Par dosage acido-basique avec de la soude, on détermine un degré de sulfonation de 0,38.

### Exemple 2 - Préparation d'un S-oPEKK non neutralisé

Un oligomère de PEKK (10 g) de masse moléculaire 2600 g/mol est sulfoné selon les conditions de l'exemple 1.

Par dosage avec de la soude, on détermine un degré de sulfonation de 0,21.

Le même protocole peut être utilisé avec le 1,4-bis(4-phénoxybenzoyl)benzène. A noter qu'à température ambiante, le 1,4-bis(4-phénoxybenzoyl)benzène sulfoné avec un degré de sulfonation de 2 n'est pas soluble dans l'eau mais est dispersable dans l'eau sous agitation.

### Exemple 3 - Préparation d'un oligomère sulfoné neutralisé S-oPEKK-Na

A partir du produit de l'exemple 2, le degré de sulfonation est déterminé par dosage acido-basique, et le PEKK sulfoné neutralisé est préparé en faisant réagir l'oligomère sulfoné avec un équivalent de soude par rapport aux fonctions sulfoniques dans de l'eau à reflux.

### Exemple 4 - Préparation d'un S-PEEK non neutralisé

Un PEEK produit par Victrex (grade 150G, 10 g), ayant un MVI (melt volume index) de 49cm³/10min (à 380°C sous une charge de 5kg), ainsi que du CISO₃H (38,8 g) sont mis en présence à 0°C. Le mélange est ensuite agité vigoureusement et chauffé à 50°C pendant 6 heures. Le mélange est ensuite refroidi à 0°C et du dichlorométhane (50 mL) est aputé pour fluidifier le mélange. Puis l'excès d'acide est quenché avec de l'eau (100 mL). Un solide se forme, il est filtré et lavé abondamment à l'eau pour enlever l'acide résiduel. Enfin le solide est séché à l'étuve sous vide pendant 2 heures à 120°C.

Par dosage acido-basique avec de la soude, on détermine un degré de sulfonation de 1,13.

### Exemple 5 - Préparation d'un S-PEEK neutralisé

A partir du produit de l'exemple 4, le degré de sulfonation est déterminé par dosage acido-basique, et le PEEK sulfoné neutralisé est préparé en le faisant réagir avec un équivalent de soude par rapport aux fonctions sulfoniques dans de l'eau à reflux.

### Exemple 6 - Propriétés de dispersion et stabilité thermique

Des dispersions de poudre de PEKK ont été préparées. Le PEKK utilisé est fourni par Arkema sous la référence 7002 PT. Le Dv50 de la poudre est de 20 µm environ.

Les mélanges suivants ont ainsi été préparés, puis chauffés à reflux :
- A (comparatif) : PEKK 7002PT (1 g) + eau (9 g).
- B (comparatif) : tensioactif Brij® S100 de Sigma Aldrich (0,01 g) + PEKK 7002PT (0,99 g) + eau (9 g).
- C : S-oPEKK (0,01 g) + PEKK 7002PT (0,99 g) + eau (9 g).
- D : S-oPEKK (0,05 g) + PEKK 7002PT (0,95 g) + eau (9 g).
- E : S-oPEKK Na (0,05 g) + PEKK 7002PT (0,95 g) + eau (9 g).
- F : S-PEEK (0,05 g) + PEKK 7002PT (0,95 g) + eau (9 g).
- G : S-PEEK Na (0,05 g) + PEKK 7002PT (0,95 g) + eau (9 g).

La qualité des dispersions a été étudiée visuellement, dans un pilulier. Une dispersion est jugée bonne si le mélange est fluide, et peu ou pas de poudre de PEKK se fixe aux parois du pilulier (hors phase liquide) après agitation. Elle est jugée passable si le mélange est fluide mais qu'une quantité notable de poudre de PEKK se fixe aux parois du pilulier (hors phase liquide) après agitation. Aucune dispersion n'est considérée comme obtenue si le mélange est épais, et qu'une démixtion est observée, avec présence de résidus de PEKK non mouillé. On note que le temps de mise en dispersion est inférieur à 2 h lorsque la solution aqueuse contient 1% en poids de PAEK sulfoné et inférieur à 1 h lorsqu'elle contient 5% en poids de PAEK sulfoné.

Ensuite, l'eau des échantillons a été évaporée à l'évaporateur rotatif et les solides obtenus séchés sous vide à 120°C pendart 2 heures. La température de cristallisation de chaque matériau après 30 minutes à 380°C a ensuite été mesurée. Celle-ci est en effet impactée par les évolutions structurales du PEKK.

Une diminution de cette température s'explique soit par des modifications chimiques importantes du polymère soit par des réactions d'allongement de chaînes associées par exemple à des phénomènes de branchements.

Les résultats sont résumés dans le tableau ci-dessous :

| **Echantillon** | **Qualité de la dispersion** | **Température de cristallisation** |
|---|---|---|
| A | Aucune dispersion | 269°C |
| B | Bonne dispersion | 250°C |
| C | Dispersion passable | 270°C |
| D | Bonne dispersion | 259°C |
| E | Bonne dispersion | 268°C |
| F | Bonne dispersion | Amorphe |
| G | Bonne dispersion | 263°C |

On constate par ailleurs qu'un PEKK imprégné au moyen d'une dispersion comprenant un des PAEK sulfonés préparés à titre d'agent de dispersion présente une stabilité thermique supérieure à celle du PEKK imprégné avec 1 % de tensioactif commercial.

## Revendications

1. Utilisation d'un polyaryléthercétone sulfoné ou, d'une aryléthercétone non polymère sulfonée, en tant qu'agent dispersant pour une poudre de résine de polyaryléthercétone dans une solution aqueuse.

2. Utilisation selon la revendication 1, dans laquelle le polyaryléthercétone est choisi dans le groupe constitué des poly-éther-cétones (PEK), des poly-éther-éther-cétones (PEEK), des poly-éther-éther-cétone-cétones (PEEKK), des poly-éther-cétone-cétones (PEKK), des poly-éther-cétone-éther-cétone-cétones (PEKEKK), des poly-éther-éther-cétone-éther-cétones (PEEKEK), des poly-éther-éther-éther-cétones (PEEEK), des poly-éther-diphényle-éther-cétone (PEDEK), de leurs mélanges et des copolymères comprenant ceux-ci, le polyaryléthercétone étant de préférence un poly-éther-cétone-cétone (PEKK).

3. Utilisation selon la revendication 1 ou 2, dans laquelle le polyaryléthercétone sulfoné est choisi dans le groupe constitué des poly-éther-cétones (PEK) sulfonés, des poly-éther-éther-cétones (PEEK) sulfonés, des poly-éther-éther-cétone-cétones (PEEKK) sulfonés, des poly-éther-cétone-cétones (PEKK) sulfonés, des poly-éther-cétone-éther-cétone-cétones (PEKEKK) sulfonés, des poly-éther-éther-cétone-éther-cétones (PEEKEK) sulfonés, des poly-éther-éther-éther-cétones (PEEEK) sulfonés, des poly-éther-diphényle-éther-cétone (PEDEK) sulfonés, de leurs mélanges et des copolymères comprenant ceux-ci.

4. Utilisation selon la revendication 1 ou la revendication 2, dans laquelle l'aryléthercétone non polymère sulfonée est le 1,4-bis(4-phénoxybenzoyl)benzène sulfoné.

5. Utilisation selon l'une des revendications 1 à 4, dans laquelle le polyaryléthercétone sulfoné ou, l'aryléthercétone non polymère sulfonée, comporte un degré de sulfonation de 0,01 à 4, de préférence de 0,1 à 1 et de préférence encore de 0,1 à 0,5.

6. Utilisation selon l'une des revendications 1 à 5, dans laquelle le polyaryléthercétone sulfoné ou, l'aryléthercétone non polymère sulfonée, comporte des groupements sulfonés choisis parmi les groupements acides sulfoniques et/ou les groupements sulfonates, la proportion molaire de groupements sulfonates dans le polyaryléthercétone sulfoné ou, respectivement l'aryléthercétone non polymère sulfonée, par rapport à l'ensemble des groupements sulfonés étant de préférence supérieure ou égale à 50 %, de préférence encore supérieure ou égale à 80 %.

7. Composition comprenant une poudre de résine de polyaryléthercétone en suspension dans une solution aqueuse, la composition comprenant en outre un polyaryléthercétone sulfoné ou, une aryléthercétone non polymère sulfonée.

8. Composition selon la revendication 7, dans laquelle le polyaryléthercétone est choisi dans le groupe constitué des poly-éther-cétones (PEK), des poly-éther-éther-cétones (PEEK), des poly-éther-éther-cétone-cétones (PEEKK), des poly-éther-cétone-cétones (PEKK), des poly-éther-cétone-éther-cétone-cétones (PEKEKK), des poly-éther-éther-cétone-éther-cétones (PEEKEK), des poly-éther-éther-éther-cétones (PEEEK), des poly-éther-diphényle-éther-cétone (PEDEK), de leurs mélanges et des copolymères comprenant ceux-ci, le polyaryléthercétone étant de préférence un poly-éther-cétone-cétone (PEKK).

9. Composition selon la revendication 7 ou la revendication 8, dans laquelle le polyaryléthercétone sulfoné est choisi dans le groupe constitué des poly-éther-cétones (PEK) sulfonés, des poly-éther-éther-cétones (PEEK) sulfonés, des poly-éther-éther-cétone-cétones (PEEKK) sulfonés, des poly-éther-cétone-cétones (PEKK) sulfonés, des poly-éther-cétone-éther-cétone-cétones (PEKEKK) sulfonés, des poly-éther-éther-cétone-éther-cétones (PEEKEK) sulfonés, des poly-éther-éther-éther-cétones (PEEEK) sulfonés, des poly-éther-diphényle-éther-cétone (PEDEK) sulfonés, de leurs mélanges et des copolymères comprenant ceux-ci.

10. Composition selon la revendication 7 ou la revendication 8, dans laquelle l'aryléthercétone non polymère sulfonée est le 1,4-bis(4-phénoxybenzoyl)benzène sulfoné.

11. Composition selon l'une des revendications 7 à 10, dans laquelle le polyaryléthercétone sulfoné ou, l'aryléthercétone non polymère sulfonée, comporte un degré de sulfonation de 0,01 à 4, de préférence de 0,01 à 1 et de préférence encore de 0,1 à 0,5.

12. Composition selon l'une des revendications 7 à 11, dans laquelle le polyaryléthercétone sulfoné ou, l'aryléthercétone non polymère sulfonée, comporte des groupements sulfonés choisis parmi les groupements acides sulfoniques et/ou les groupements sulfonates, la proportion molaire de groupements sulfonates dans le polyaryléthercétone sulfoné ou, respectivement dans l'aryléthercétone non polymère sulfonée, par rapport à l'ensemble des groupements sulfonés étant de préférence supérieure ou égale à 50 %, de préférence supérieure ou égale à 80 %.

13. Composition selon l'une des revendications 7 à 12, dans laquelle la teneur massique en polyaryléthercétone sulfoné ou, en aryléthercétone non polymère sulfonée, par rapport à la poudre de résine de polyaryléthercétone est de 0,1 à 20 %, de préférence de 0,5 à 5 %.

14. Procédé de préparation d'un semi-produit comprenant une résine de polyaryléthercétone et des fibres de renfort, comprenant :
- la fourniture d'une composition selon l'une des revendications 7 à 13, et l'imprégnation de fibres de renfort avec cette composition ;
- le séchage des fibres de renfort imprégnées ;
- le chauffage des fibres de renfort imprégnées de sorte à fondre le polyaryléthercétone ; et
- optionnellement, une étape de calandrage.

15. Procédé de préparation selon la revendication 14, dans lequel les fibres de renfort sont des fibres de carbone.

16. Procédé de préparation selon la revendication 14 ou 15, dans lequel le semi-produit est choisi parmi un pré-imprégné ou une tape.

17. Semi-produit susceptible d'être préparé selon le procédé de l'une des revendications 14 à 16.

18. Utilisation d'un semi-produit selon la revendication 17 pour la fabrication de matériaux composites.

## Patentansprüche

1. Verwendung eines sulfonierten Polyaryletherketons oder eines sulfonierten nicht polymeren Aryletherketons als Dispergiermittel für ein Polyaryletherketonharzpulver in einer wässrigen Lösung.

2. Verwendung nach Anspruch 1, wobei das Polyaryletherketon aus der Gruppe gewählt ist, die aus den Polyetherketonen (PEK), den Polyetheretherketonen (PEEK), den Polyetheretherketonketonen (PEEKK), den Polyetherketonketonen (PEKK), den Polyetherketonetherketonketonen (PEKEKK), den Polyetheretherketonetherketonen (PEEKEK), den Polyetheretheretherketonen (PEEEK), den Polyetherdiphenyletherketonen (PEDEK), ihren Mischungen und den diese umfassenden Copolymeren besteht, wobei das Polyaryletherketon bevorzugt ein Polyetherketonketon (PEKK) ist.

3. Verwendung nach Anspruch 1 oder 2, wobei das sulfonierte Polyaryletherketon aus der Gruppe gewählt ist, die aus den sulfonierten Polyetherketonen (PEK), den sulfonierten Polyetheretherketonen (PEEK), den sulfonierten Polyetheretherketonketonen (PEEKK), den sulfonierten Polyetherketonketonen (PEKK), den sulfonierten Polyetherketonetherketonketonen (PEKEKK), den sulfonierten Polyetheretherketonetherketonen (PEEKEK), den sulfonierten Polyetheretheretherketonen (PEEEK), den sulfonierten Polyetherdiphenyletherketonen (PEDEK), ihren Mischungen und den diese umfassenden Copolymeren besteht.

4. Verwendung nach Anspruch 1 oder 2, wobei das sulfonierte nicht polymere Aryletherketon das sulfonierte 1,4-bis(4-Phenoxybenzoyl)benzol ist.

5. Verwendung nach einem der Ansprüche 1 bis 4, wobei das sulfonierte Polyaryletherketon oder das sulfonierte nicht polymere Aryletherketon einen Sulfonierungsgrad von 0,01 bis 4, bevorzugt von 0,1 bis 1 und noch bevorzugter von 0,1 bis 0,5 aufweist.

6. Verwendung nach einem der Ansprüche 1 bis 5, wobei das sulfonierte Polyaryletherketon oder das sulfonierte nicht polymere Polyaryletherketon sulfonierte Gruppen aufweist, die unter den Sulfonsäuregruppen und/oder den Sulfonatgruppen gewählt sind, wobei der molare Anteil von Sulfonatgruppen in dem sulfonierten Polyaryletherketon beziehungsweise dem sulfonierten nicht polymeren Aryletherketon, bezogen auf die Gesamtheit der sulfonierten Gruppen, größer oder gleich 50 %, noch bevorzugter größer oder gleich 80 % ist.

7. Zusammensetzung, die ein in einer wässrigen Lösung suspendiertes Polyaryletherketonharzpulver umfasst, wobei die Zusammensetzung ferner ein sulfoniertes Polyaryletherketon oder ein sulfoniertes nicht polymeres Aryletherketon umfasst.

8. Zusammensetzung nach Anspruch 7, wobei das Polyaryletherketon aus der Gruppe gewählt ist, die aus den Polyetherketonen (PEK), den Polyetheretherketonen (PEEK), den Polyetheretherketonketonen (PEEKK), den Polyetherketonketonen (PEKK), den Polyetherketonetherketonketonen (PEKEKK), den Polyetheretherketonetherketonen (PEEKEK), den Polyetheretheretherketonen (PEEEK), den Polyetherdiphenyletherketonen (PEDEK), ihren Mischungen und den diese umfassenden Copolymeren besteht, wobei das Polyaryletherketon bevorzugt ein Polyetherketonketon (PEKK) ist.

9. Zusammensetzung nach Anspruch 7 oder Anspruch 8, wobei das sulfonierte Polyaryletherketon aus der Gruppe gewählt ist, die aus den sulfonierten Polyetherketonen (PEK), den sulfonierten Polyetheretherketonen (PEEK), den sulfonierten Polyetheretherketonketonen (PEEKK), den sulfonierten Polyetherketonketonen (PEKK), den sulfonierten Polyetherketonetherketonketonen (PEKEKK), den sulfonierten Polyetheretherketonetherketonen (PEEKEK), den sulfonierten Polyetheretheretherketonen (PEEEK), den sulfonierten Polyetherdiphenyletherketonen (PEDEK), ihren Mischungen und den diese umfassenden Copolymeren besteht.

10. Zusammensetzung nach Anspruch 7 oder Anspruch 8, wobei das sulfonierte nicht polymere Aryletherketon das sulfonierte 1,4-bis(4-Phenoxybenzoyl)benzol ist.

11. Zusammensetzung nach einem der Ansprüche 7 bis 10, wobei das sulfonierte Polyaryletherketon oder das sulfonierte nicht polymere Aryletherketon einen Sulfonierungsgrad von 0,01 bis 4, bevorzugt von 0,01 bis 1 und noch bevorzugter von 0,1 bis 0,5 aufweist.

12. Zusammensetzung nach einem der Ansprüche 7 bis 11, wobei das sulfonierte Polyaryletherketon oder das sulfonierte nicht polymere Polyaryletherketon sulfonierte Gruppen aufweist, die unter den Sulfonsäuregruppen und/oder den Sulfonatgruppen gewählt sind, wobei der molare Anteil von Sulfonatgruppen in dem sulfonierten Polyaryletherketon beziehungsweise in dem sulfonierten nicht polymeren Aryletherketon, bezogen auf die Gesamtheit der sulfonierten Gruppen, größer oder gleich 50 %, bevorzugter größer oder gleich 80 % ist.

13. Zusammensetzung nach einem der Ansprüche 7 bis 12, wobei der Massengehalt an sulfoniertem Polyaryletherketon oder an sulfoniertem nicht polymerem Aryletherketon, bezogen auf das Polyaryletherketonharzpulver, 0,1 bis 20 %, bevorzugt 0,5 bis 5 % beträgt.

14. Verfahren zur Herstellung eines Halbzeugs, das ein Polyaryletherketonharz und Verstärkungsfasern umfasst, umfassend:
- die Bereitstellung einer Zusammensetzung nach einem der Ansprüche 7 bis 13 und das Tränken von Verstärkungsfasern mit dieser Zusammensetzung;
- das Trocknen der getränkten Verstärkungsfasern;
- das Erhitzen der getränkten Verstärkungsfasern, so dass das Polyaryletherketon schmilzt; und
- optional einen Kalandrierschritt.

15. Herstellungsverfahren nach Anspruch 14, wobei die Verstärkungsfasern Kohlenstofffasern sind.

16. Herstellungsverfahren nach Anspruch 14 oder 15, wobei das Halbzeug unter einem Prepreg oder einem Tape gewählt ist.

17. Halbzeug, das geeignet ist, nach dem Verfahren eines der Ansprüche 14 bis 16 hergestellt zu werden.

18. Verwendung eines Halbzeugs nach Anspruch 17 zur Fertigung von Verbundwerkstoffen.

## Claims

1. Use of a sulfonated polyaryl ether ketone or of a sulfonated non-polymeric aryl ether ketone as a dispersant for a polyaryl ether ketone resin powder in an aqueous solution.

2. Use according to Claim 1, in which the polyaryl ether ketone is chosen from the group consisting of polyether ketones (PEK), polyether ether ketones (PEEK), polyether ether ketone ketones (PEEKK), polyether ketone ketones (PEKK), polyether ketone ether ketone ketones (PEKEKK), polyether ether ketone ether ketones (PEEKEK), polyether ether ether ketones (PEEEK), polyether diphenyl ether ketones (PEDEK), mixtures thereof and copolymers comprising same, the polyaryl ether ketone preferably being a polyether ketone ketone (PEKK).

3. Use according to Claim 1 or 2, in which the sulfonated polyaryl ether ketone is chosen from the group consisting of sulfonated polyether ketones (PEK), sulfonated polyether ether ketones (PEEK), sulfonated polyether ether ketone ketones (PEEKK), sulfonated polyether ketone ketones (PEKK), sulfonated polyether ketone ether ketone ketones (PEKEKK), sulfonated polyether ether ketone ether ketones (PEEKEK), sulfonated polyether ether ether ketones (PEEEK), sulfonated polyether diphenyl ether ketones (PEDEK), mixtures thereof and copolymers comprising same.

4. Use according to Claim 1 or Claim 2, in which the sulfonated non-polymeric aryl ether ketone is sulfonated 1,4-bis(4-phenoxybenzoyl)benzene.

5. Use according to one of Claims 1 to 4, in which the sulfonated polyaryl ether ketone or the sulfonated non-polymeric aryl ether ketone has a degree of sulfonation of from 0.01 to 4, preferably from 0.1 to 1 and more preferably from 0.1 to 0.5.

6. Use according to one of Claims 1 to 5, in which the sulfonated polyaryl ether ketone or the sulfonated non-polymeric aryl ether ketone includes sulfonated groups chosen from sulfonic acid groups and/or sulfonate groups, the molar proportion of sulfonate groups in the sulfonated polyaryl ether ketone or, respectively, in the sulfonated non-polymeric aryl ether ketone, relative to the total amount of sulfonated groups, preferably being greater than or equal to 50%, more preferably greater than or equal to 80%.

7. Composition comprising a polyaryl ether ketone resin powder suspended in an aqueous solution, the composition also comprising a sulfonated polyaryl ether ketone or a sulfonated non-polymeric aryl ether ketone.

8. Composition according to Claim 7, in which the polyaryl ether ketone is chosen from the group consisting of polyether ketones (PEK), polyether ether ketones (PEEK), polyether ether ketone ketones (PEEKK), polyether ketone ketones (PEKK), polyether ketone ether ketone ketones (PEKEKK), polyether ether ketone ether ketones (PEEKEK), polyether ether ether ketones (PEEEK), polyether diphenyl ether ketones (PEDEK), mixtures thereof and copolymers comprising same, the polyaryl ether ketone preferably being a polyether ketone ketone (PEKK).

9. Composition according to Claim 7 or Claim 8, in which the sulfonated polyaryl ether ketone is chosen from the group consisting of sulfonated polyether ketones (PEK), sulfonated polyether ether ketones (PEEK), sulfonated polyether ether ketone ketones (PEEKK), sulfonated polyether ketone ketones (PEKK), sulfonated polyether ketone ether ketone ketones (PEKEKK), sulfonated polyether ether ketone ether ketones (PEEKEK), sulfonated polyether ether ether ketones (PEEEK), sulfonated polyether diphenyl ether ketones (PEDEK), mixtures thereof and copolymers comprising same.

10. Composition according to Claim 7 or Claim 8, in which the sulfonated non-polymeric aryl ether ketone is sulfonated 1,4-bis(4-phenoxybenzoyl)benzene.

11. Composition according to one of Claims 7 to 10, in which the sulfonated polyaryl ether ketone or the sulfonated non-polymeric aryl ether ketone has a degree of sulfonation of from 0.01 to 4, preferably from 0.01 to 1 and more preferably from 0.1 to 0.5.

12. Composition according to one of Claims 7 to 11, in which the sulfonated polyaryl ether ketone or the sulfonated non-polymeric aryl ether ketone includes sulfonated groups chosen from sulfonic acid groups and/or sulfonate groups, the molar proportion of sulfonate groups in the sulfonated polyaryl ether ketone or, respectively, in the sulfonated non-polymeric aryl ether ketone, relative to the total amount of sulfonated groups, preferably being greater than or equal to 50%, preferably greater than or equal to 80%.

13. Composition according to one of Claims 7 to 12, in which the mass content of sulfonated polyaryl ether ketone or of sulfonated non-polymeric aryl ether ketone, relative to the polyaryl ether ketone resin powder, is from 0.1% to 20%, preferably from 0.5% to 5%.

14. Process for preparing a semifinished product comprising a polyaryl ether ketone resin and reinforcing fibers, comprising:
- the provision of a composition according to one of Claims 7 to 13, and the impregnation of reinforcing fibers with this composition;
- drying of the impregnated reinforcing fibers;
- heating of the impregnated reinforcing fibers so as to melt the polyaryl ether ketone; and
- optionally, a calendering step.

15. Preparation process according to Claim 14, in which the reinforcing fibers are carbon fibers.

16. Preparation process according to Claim 14 or 15, in which the semifinished product is chosen from a prepreg or a tape.

17. Semifinished product which may be prepared according to the process of one of Claims 14 to 16.

18. Use of a semifinished product according to Claim 17, for the manufacture of composite materials.
